# EUROPEAN PATENT SPECIFICATION

(11) **EP 1 070 087 B1**
(45) Date of publication and mention of the grant of the patent: **03.07.2002**
(21) Application number: 99915749.8
(22) Date of filing: 08.04.1999
(51) Int. Cl.: C08F 4/64, C08F 10/06

(54) **A CATALYST COMBINATION AND A PROCESS FOR PREPARING LINEAR, ISOTACTIC POLYMERS**
EINE KATALYSATORKOMBINATION UND VERFAHREN ZUR HERSTELLUNG VON LINEAREN, ISOTAKTISCHEN POLYMEREN
COMBINAISON DE CATALYSEUR ET PROCEDE DE PREPARATION DE POLYMERES ISOTACTIQUES LINEAIRES

(30) Priority: 09.04.1998 DE 19816154
(43) Date of publication of application: 24.01.2001
(60) Divisional application: 01123644.5
(73) Proprietor: Rieger, Bernhard, Prof. Dr., 89275 Oberelchingen (DE)
(72) Inventor: Rieger, Bernhard, Prof. Dr., 89275 Oberelchingen (DE)
(74) Representative: Pfenning, Meinig & Partner
(86) International application number: PCT/EP99/02378
(87) International publication number: WO 99/52950

(56) References cited:
- EP-A- 0 582 194
- GB-A- 2 241 244
- DIETRICH, ULF ET AL: "Control of Stereoerror Formation with High-Activity "Dual-Side" Zirconocene Catalysts: A Novel Strategy To Design the Properties of Thermoplastic Elastic Polypropenes" J. AM. CHEM. SOC. (1999), 121(18), 4348-4355 , XP002110148
- RIEGER, BERNHARD ET AL: "Novel metallocene catalyzed polypropene homo- and brush-copolymers: control of new morphologies and beyond" POLYM. MATER. SCI. ENG. (1999), 80, 51-52 , XP002110149
- DIETRICH U ET AL: "NEW CLASS OF THERMOPLASTIC ELASTIC POLYPROPENES PREPARED WITH A HIGH ACTIVITY 'DUAL SIDE' ZIRCONOCENE CATALYST" RAPRA ABSTRACTS, vol. 36, no. 1, January 1999 (1999-01), page 138 XP000800737 ISSN: 0033-6750
- RIEGER B: "STEREOSPECIFIC PROPENE POLYMERIZATION WITH RAC- 1,2-BIS(N5 -(90FLUORENYL))-1-PHENYLETHANEZIRCONIUM DICHLORIDE/METHYLALUMOXANE" POLYMER BULLETIN, vol. 32, no. 1, 1 January 1994 (1994-01-01), pages 41-46, XP000420835 ISSN: 0170-0839

## Description

The present invention relates to a new catalyst combination and a process for preparing linear, isotactic polymers, wherein the isotacticity of the linear polymers due to a statistic distribution of stereoscopic errors in the polymer chain, being within the range of from 25 to 60 % of [mmmm] pentad concentration.

For a long time, isotactic polymers have been of interest as plastic materials for manufacturing articles of relatively good deformation resistance, such as e.g. sheathings of household appliances. In general, such isotactic polymers with propylene as monomer are of highly crystalline nature and, therefore, relatively hard with little or no impact resistance at all so that they will come into question only for application fields in which those characteristics are desirable.

Most recently, various attempts have been made, aiming at preparing also polypropylene with elastic characteristics. European Printed Publication 0 707 016 A1 specifies a catalyst composition and a process for preparing polyolefins. The catalysts specified in European Printed Publication 0 707 016 A1 are, in substance, made up of a metallocene compound having an indene ring and a fluorene ring which are bridged via C, Si or Ge. In case of the metallocene compound, it, in this connexion, is obviously essential that, in the indene ring system, at least the residue denoted with R⁴ not be hydrogen. When that residue R⁴ is hydrogen, the effects, such as specified in the aforementioned European Patent Application, will not be attained (P 6, from L 57 up to P 7, L 3). The polymers specified in European Printed Publication 0 707 016 A1 and prepared with metallocenes, here especially the polypropylene prepared with those metallocenes, however, show as can be drawn from the examples and the graphs, but unsatisfactory characteristics in regard of the elastic behaviour.

Departing from all these facts, it is the object of the present invention to find a new catalysator combination and to suggest a process to make polymers from olefinically unsaturated compounds available, not only showing thermoplastic but, at the same time, thermoplastic-elastic characteristics and, thus, being applicable for many application fields.

That object is, in regard of the catalysator combination, solved by the characterising features of Claim 1; in regard of the process for preparing the polymers, it is solved by the characterising features of Claim 5.

The invention relates to a new catalyst combination containing a metal complex and an activator.

The metal complex is a metallocene compound. Herewith, metal compounds of the Fourth Auxiliary Group of the Periodic System Table IVB generally come into question, which compounds may be present as defined metal complexes and with which compounds activators are mixed. In general, the metals are present in the complexes in formally positively charged manner.

As regards the metals, titanium, zirconium, hafnium, vanadium, niobium, and tantalum specifically come into question, the metal atom preferably showing halogen or a C₁ - C₈ alkyl, aryl or benzyl as residue X.

The metallocene is defined by general Formula I. 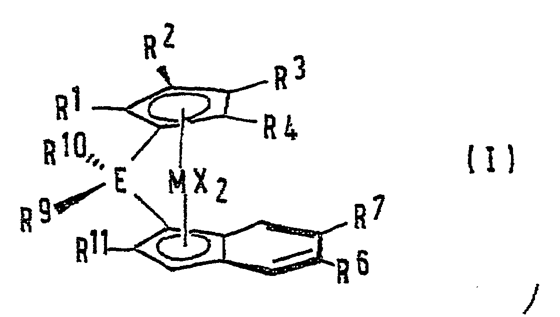 wherein the residues R¹ - R⁷ are a linear or branched C₁ - C₁₀ alkyl, a 5-7-linked cycloalkyl that, in its turn, may carry one or several C₁ - C₆ alkyl residues as substituents, a C₆ - C₁₈ aryl, aryl alkyl or alkyl aryl, in which case R¹, R²; R³, R⁴; and R⁶, R, here again, may be partially or simultaneously integrated into 5-7-linked cycloalkyl or aryl rings fused thereto.

In case of the metallocene compound according to general Formula I, it is essential that, in general Formula I, the carbon atom adjacent to the residue R⁷ and the carbon atom adjacent to the residue R⁶ be, with the indene ring system, only hydrogen. Thereby, it is ensured that, with the indene ring system, a linear system can form by the residues R⁶ and R⁷, which system, obviously, will prove to be especially advantageous when preparing the isotactic elastomers according to the invention. In contrast to the metallocene complex according to European Printed Publication 0 707 016 Al, only hydrogen atoms and no carbon atoms with further residues, as is imperative in the aforementioned European laying-open specification, can, thus, be found at the positions mentioned in the aforegoing.

In this connexion, suitable bridging structural units E are 1.2-ethyl, 1.3-propyl, 1.4-butyl, carbon, silicon or germanium. For the case that E is carbon, silicon or germanium, the bridging structural unit E may, herewith, additionally carry the residues R⁹ and R¹⁰ which, then, are a C¹ - C₈ alkyl, a 4-7-linked cycloalkyl or aryl, R⁹ and R¹⁰ being able to also form a 4-7-linked cycloalkyl or aryl jointly with E.

A particularly preferred embodiment of the invention resides in that such a metallocene complex is used as reflected by general Formula VII. 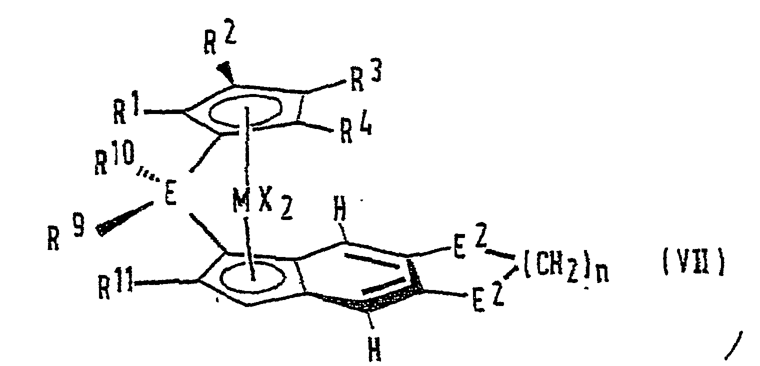 wherein all the residues have the significations indicated above. In contrast to the metallocene complex according to general Formula I, it, however, now is imperative here on the indene ring system that another ring fused thereto be at hand which is bridged via two E² groups.

E₂ therewith, signifies CH₂, oxygen or sulphur and n is 1 or 2.

As defined in Patent Claim 1, it certainly is furthermore provided in accordance with the invention, to additionally use at least also one activator, apart from the metallocene compounds specified above. The invention, herewith, generally encompasses all the activators that have as yet become known in the state-of-the-art for metallocene compounds. Such activators have also been specified by European Printed Publication 0 707 016 Al. As activator, at least one compound of general Formulas II to VI is, however, used with special preference. Accordingly, the activator may be an open-chain or cyclic alumoxane compound of general Formula II or III, such as is reflected hereinafter: 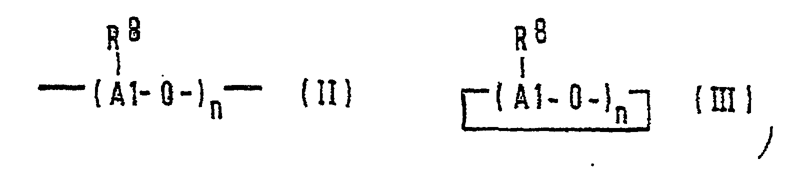 wherein R⁸ is a C₁ - C₄ alkyl group and n is a number between 5 and 30.

In case of the catalyst combination according to the invention, also the above-specified compounds of general Formulas II and III can, alone or in combination with the subsequent activators such as are reflected by general Formulas IV to VI, be used.

B (C₆F₅)₃ (IV)

R⁹ ₃C[B(C₆F₅)₄] (V)

[R⁹ ₃N H][B (C₆F₅)₄] (VI)

In general Formulas IV to VI, R⁹, in this connexion, signifies a C₁ - C₄ alkyl group or an aryl group.

It has, therewith, proven to be especially favourable when the metallocene complex according to general Formula I and the activator according to general Formulas II to VI are employed in such quantities that the atomic ratio between aluminium from the alumoxane or boron from the cationic activator and the transition metal from the metallocene complex is within the range of from 1:1 to 10⁶:1.

The invention furthermore relates to a process for preparing linear, thermoplastic-elastic polymers from olefinically unsaturated compounds with an isotactic arrangement of the monomer unit and a statistic distribution of isolated stereoscopic errors along the individual chains, tacticity varying within the range of between 25 and 60 % [mmmm] pentad concentration. A regular sequence of isotactic and atactic blocks, therewith, is excluded. In many cases, it was found that the [rmrm] pentad was totally missing or present with a maximum of 2.5 % of the entire pentad area. Furthermore, it became evident that, in most cases, the [rrrr] and [rrrm] pentads are always greater than the [rmrm] pentad. The process according to the invention is specifically characterised in that a specially selected catalyst combination is used as described before.

Pressures of from 1 to 100 bars, preferably of from 3 to 20 bars and in particular of from 5 to 15 bars, have proven to be suitable reaction parameters for preparing the linear, thermoplastic, elastomeric olefin polymers. Favourable temperatures are within the range of from -50 °C to 200 °C, of preference at from 10 to 150 °C and of high preference at from 20 to 40 °C.

The polymerisation reactions can be carried out in the gas phase, in suspension and in supercritical monomers and especially in solvents inert under polymerisation conditions. In particular the solution polymerisation has proven to be the clearly superior thing for the present preparation process. Suitable inert solvents for that purpose are such solvents that do not contain any reactive groups in the molecule, i. e. aromatic solvents like benzole, toluol, xylol, ethyl benzole or alkanes such as e. g. propane, n-butane, i-butane, pentane, hexane, heptane or mixtures thereof.

The polymers prepared according to the invention are linear, thermoplastic, elastic polymers from an olefinically unsaturated compound with an isotactic arrangement of the monomer units and a statistic distribution of isolated stereoscopic errors along the individual chains and a mean molecular weight Mw of the polymers within the range of from 100,000 to 800,000 gms/mol and a TG of from -50 to +30.

With the polymer prepared according to the invention, it is essential that the stereoscopic errors be situated in the polymer chain itself and that, thus, a specific pentad concentration result. In this connexion, it was found that, with the polymers prepared according to the invention, the [rmrm] pentad with a maximum of 2.5 % of the entire pentad area will, in general, be present. In many cases, it was also found that that [rmrm] pentad was completely missing.

Furthermore, it became evident that, in most cases, the [rrrr] and [rrrm] pentads are always greater than the [rmrm] pentad. Determination of the pentad concentration in case of polymers has, properly speaking, become known from the state-of-the-art and is specified e.g. in J. A. Ewen, "Catalytic Polymerisation of Olefins", Eds. T. Keii, K. Soga; Kodanska Elsevier Pub.; Tokyo, 1986, P 271 et seqq. Also the pentad concentration determination according to the invention now present was carried out by means of the method specified in the above-mentioned piece of pertinent literature.

Apart from the above-mentioned specific pentad concentration, the linear, isotactic polymers have a molecular weight within the range of from 100,000 to 800,000, of preference from 110,000 to 500,000 and of special preference within the range of from 120,000 to 300,000 gms/mol. The mean molecular weights Mw (mean weight value) of the polymers were measured by means of the gel permeation chromatography (GPC) method at 135 °C with microstyragel as column material and 1, 2, 4-trichlorobenzole as solvent against closely distributed polypropylene standards. The molecular weight distribution Mw/Mn (mean weight value/mean numerical value) of the polymers was likewise measured by means of the gel permeation chromatography method and generally amounts to from 1.2 to 3.5.

In addition to all that, the polymers show a glass transition temperature Tg within the range of from -50 °C to +30 °C, of special preference a Tg of from -20 °C to +10 °C. The glass transition temperature was determined by means of the DSC method.

The linear, isotactic polymers prepared according to the invention present, after all, a structure of one or several C₂ - C₂₀ olefins. In this case, the olefin is preferred to be a C₃ - C₂₀ - Alk-1-ene. Examples of such C₃ - C₂₀ - Alk-1-enes are: propene, 1-butene, 2-butene, 1-pentene, 1-hexene, 1-octene, 1-nonene, 1-decene, 1-dodecene, 1-hexadecene, 1-octadecene, 1-eicosene.

Apart from the already mentioned olefins, also C₅ - C₂₀ cycloolefins are of the especially suitable kind. Examples thereof are cyclopentene, cyclohexene, norbornadiene and its derivatives.

In case of the linear, isotactic polymers, polypropylene is especially preferred. Further suitable polymers are copolymers from propylene and a C₄ - C₂₀ olefin or a cycloolefin. It is also possible to prepare terpolymers which show the characteristics defined in Patent Claim 1 when they present a structure of propylene, a C₂ - C₂₀ olefin and a cycloolefin.

The polymers prepared according to the invention are e.g. soluble in toluol at a temperature within the range of from 20 to 80 °C; they show a distinct elastic behaviour in a tensile-strength test, measured with a "Standard Universal Testing Machine ZWICK 1445", as specified in the examples, and, in general, possess a crystallisation melting temperature, measured by means of the "Differential Scanning Calometry" (DSC) method within the range of from -50 °C to 150 °C. In particular, it has to be emphasised that, also in this case, the polymers clearly differ, in regard of their elastic-thermoplastic behaviour, from the state-of-the-art, i.e. from European Printed Publication 0 707 016 A1 mentioned in the introductory part to the Description. This being so, the polymers prepared according to the invention are particularly suited for the manufacture of articles of relatively good deformation resistance, such as e. g. sheathings for household appliances. Furthermore, it is worth mentioning that the polymers can be used in polymer mixtures for impact resistance modification. Due to their elastic characteristics, the polymers are especially suited for elastic sheets, moulded bodies, and gaskets.

The present invention will, hereinafter, be explained in more detail on the basis of several preparation examples of the catalysts and on the basis of polymerisation examples. Herewith, there show:
- Fig. 1: tensile-strength measurements on two polymers prepared according to the invention, as compared to two polymers from European Printed Publication 0 707 016 A1,

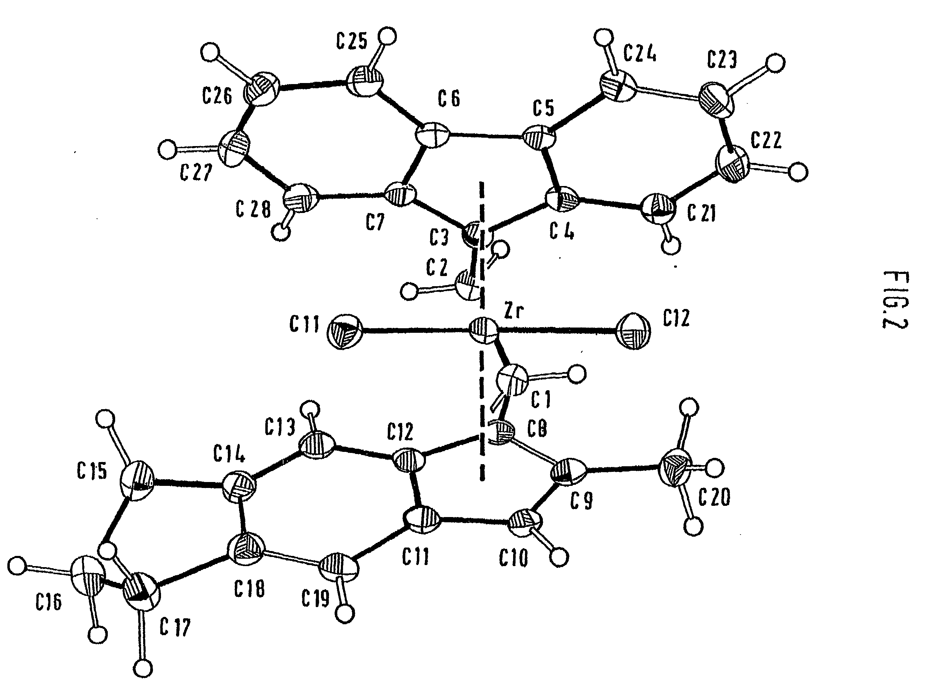

- Fig. 2: an X-ray structure analysis of a metallocene complex according to the invention,

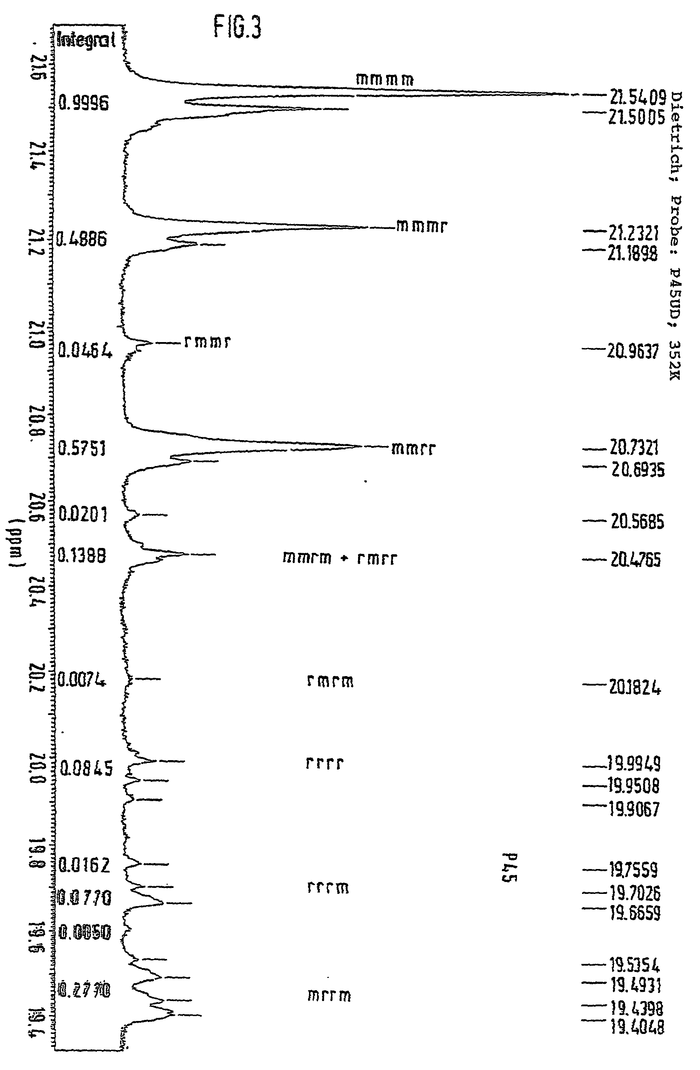

- Fig. 3: a nuclear magnetic resonance (NMR) spectrum of a polymer prepared according to the invention, and
- Fig. 4: a nuclear magnetic resonance (NMR) spectrum of another polymer prepared according to the invention.

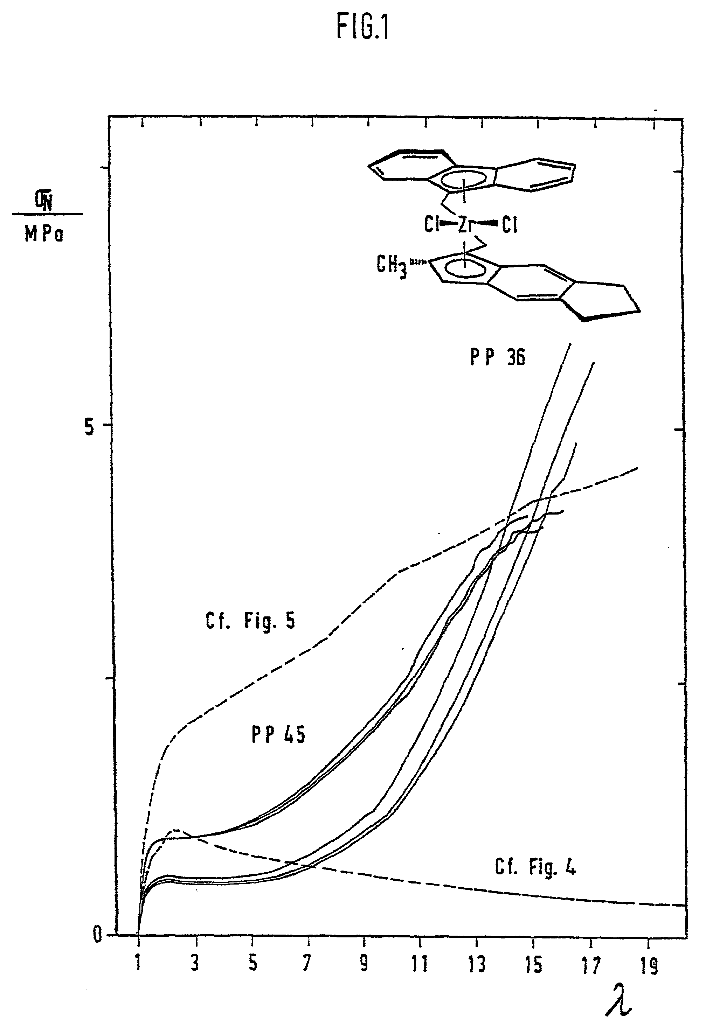

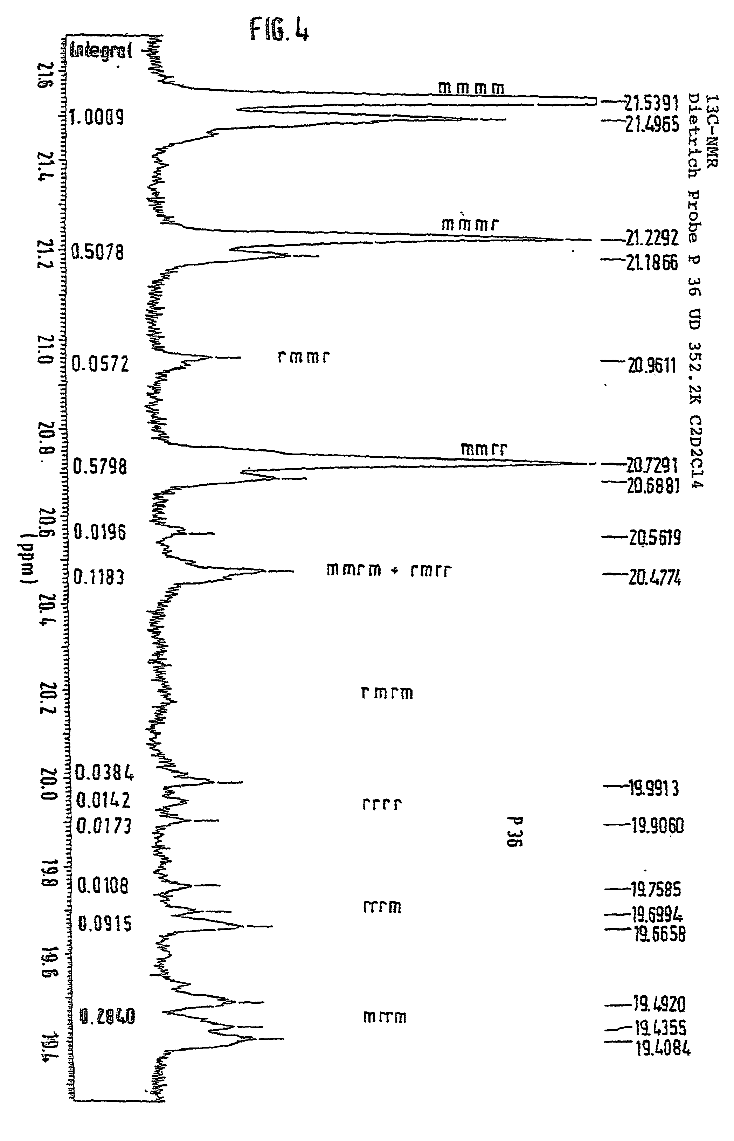

Fig. 1 now illustrates the tensile-strength measurements of two selected examples from European Printed Publication 0 707 016 A1, as compared to two polymers prepared in accordance with the invention. By the remarks "Cf. Fig. 4" and "Cf. Fig. 5" in Fig. 1, the corresponding examples from European Printed Publication 0 707 016 A1 are meant in this case. As can be drawn from a comparison of those tensile-strength curves with the tensile-strength curves of the polymers (PP 36 and PP 45) prepared according to the invention, the polymers according to the invention show a distinctive, rubber-elastic plateau. Contrary thereto, the polymers according to European Printed Publication 0 707 016 A1 present either a flow behaviour (Fig. 4) or the polymer breaks in case of higher expenditures of force (Fig. 5). It is just that comparison that clearly illustrates the surprising characteristics of the polymers prepared according to the invention and showing a distinctive, rubber-elastic behaviour.

### Catalyst preparation

### Obtaining of 5.6-cyclopenta-2-methyl-indane-1-one

40.4 mL of methacryl acid chloride (387.9 mmols) are, together with 62.06 gms of anhydrous aluminium chloride (20 mol% in excess), incorporated into 250 mL of CH₂Cl₂, cooled down to -78 °C, and slowly mixed with 50.0 mL of indane (45.84 gms, 387.9 mmols). As the indane is added, the colour changes from bright yellow to orange. The mixture is carefully quenched with diluted HCl*aq, washed with hydrous K₂CO₃ solution and water, and dried through Na₂SO₄.

Yield: 70.07 gms (376.2 mmols) of oily product, 97.0 % of the theory NMR (200 mcps, CDCl₃ 7.24 ppm): δ 1.25 ppm d (J = 6.9 cps) 3 H methyl group, δ 2.10 ppm m (J = 3.7 to 7.6 cps) 2 H aliphatic protons of the cycles, δ 2.62 ppm m 2 H aliphatic protons of the indanone ring, δ 2.86 ppm m (J = 11 to 14 cps) 4 H aliphatic protons of the cycles, δ 3.25 ppm m (J = 7.0 cps) 1 H aliphatic proton of the indanone system, δ 7.21 and 7.51 ppm s 2 H aromatic MS (GC-MS) m/z 186 (M+ 100 %), (186, 251 mol-1).

### Obtaining of 5.6-cyclopenta-2-methylindane-1-ole

70.07 gms (376.2 mmols) of the 2-methyl-5.6-cyclopentylindane-1-one are, with 5 gms of LiAlH₄, reduced in 200 mL of Et₂O by letting the ketone drip (2 hrs) slowly towards an ice-cooled suspension of LiAlH₄. Agitating is effected all through the night and quenching with H₂O is carried out, the colour of the solution changing from lime green to bright yellow. Now 15 mL of HCl are added in concentrated manner and the emulsion is agitated for 1 h. The etherial phase is separated, neutralised with 200 mL of K₂CO₃ solution, and three times washed with water.

Thereafter, drying is effected through Na₂SO₄ and the solvent is completely removed. A crystalline mixture of the diastereomeric 1-indanoles is obtained. NMR (200 mcps, CDCl₃): δ 1.13 ppm d 3 H methyl group, δ 1.76 ppm wide 1 H OH group, δ 2.05 ppm m 2 H aliphatic protons of the cycles, δ 2.15 to 2.71 ppm m 2 H aliphatic protons of the indanole ring, δ 2.87 ppm m 4 H aliphatic protons of the cycles, δ 3.08 ppm 1 H aliphatic proton of the indanole system, δ 4.17 and 4.93 ppm d 2 H with OH function on the indanole ring, δ 7.08 and 7.23 ppm d 2 H aromatic.

Yield: 69.62 gms, 369.8 mmols, 98.3 % of the theory MS (GC-MS) m/z 188 (M+ 100 %), (188.267 gms mol⁻¹).

### Obtaining of 5.6-cyclopenta-2-methylindene

69.62 gms (369.8 mmols) of the diastereomer mixture of the 2-methyl-5.6-cyclopentylindene-1-oles are dissolved in 500 mL of benzole; and then 3 to 5 gms of p-TosOH are added and the emulsion is, for three quarters of an hour, boiled on the water separator under reflux. The organic phase is separated, neutralised with 200 mL of K₂CO₃ solution, and three times washed with water. Thereafter, drying is effected through Na₂SO₄ and the solvent is completely removed.

The product colourlessly crystallises from n-pentane; yield: 57.67 gms, 338.7 mmols corresponding to 91.6 % of the theory MS (GC-MS) m/z 170 (M+ 100 %), (170.225 gms mol⁻¹). NMR (200 mcps, CDCl3 7,24 ppm) : δ 2.23 ppm m/s 5 H methylene and 2-methyl group of the indene system, δ 3.01 ppm t 4 H methylene groups, δ 3.32 ppm s 2 H methylene group acids, δ 6.51 ppm s 1 H olefinic indene system, δ 7.20 and 7.34 ppm s 2 H aromatic, 13-NMR (200 mcps, CDCl₃ ) : δ 16.8 ppm methyl group, δ 25.8 ppm methylene group of Cycle 5, δ 32.66 and 32.72 ppm methylene groups of the Cycle, δ 42.2 ppm methylene group of the indene system, δ 127.1 ppm tertiary C-atom of the indene system, δ 115.5 and 119.5 (each with H) ppm aromatic C-atoms, the same without H for 139.6, 141.7, 142.1, 144.4, and 145.0 ppm incl 4° olefinic C-atom of the indene system (cf. CH correlation and HH-COSY).

### Obtaining of 1-(9 fluorenyl)-2(1-(5.6-cyclopenta-2-methyl)indenyl)ethane

3.89 gms of 2-methyl-5.6-cyclopentylindene-1 (22.85 mmols) are, with 14.3 mL of n-BuLi, deprotonated in 150 mL of dioxane and then mixed with a solution of 25.13 mmols of 2-(9'-fluorenyl)ethyltrifluoromethane sulphonate in 100 mL of dioxane. Agitating is effected all through the night, heating up to 60 °C is carried out for half an hour and the solution is quenched with ca. 3 mL of H₂O. The dioxane is removed and the product is extracted with three times 200 mL of Et₂O. Without chromatographic processing, 6.49 gms (17.9 mmols, 78.3 % of the theory) of a colourless, crystalline Product are obtained.

NMR (200 mcps, CDC13, 7.24 ppm): δ 1.89 ppm s 3 H methyl group, δ 1.41 ppm to 1.72 ppm m 4 H aliphatic protons of the bridge, δ 2.10 ppm pseudo-t 2 H aliphatic protons of the cycle, δ 2.90 ppm pseudo-t 4 H aliphatic protons of the cycle, δ 3.87 ppm t 1 H aliphatic proton of the fluorene system, δ 6.40 ppm s 1 H indene proton, δ 6.98 and 7.07 ppm aromatic protons of the indene system, δ 7.31 to 7.77 ppm m 8 H aromatic of the fluorene. MS (FD) m/z 362.5 (M+ 100 %).

### Obtaining of 1-(9 fluorenyl)-2-(1-(5.6-cyclopenta-2-methyl) indenyl)ethane zirconocene dichloride

1.711 gms of 1-[1'-(2'-methyl)5', 6'-cyclopentylindenyl-2-(9"-fluorenyl)] ethane (4.72 mmols) are dissolved in 100 mL of toluol, mixed with 10 mL of dioxane, and deprotonated, at low temperature, with 5.9 mL of n-BuLi. Agitating is effected for ca. 1 hour and then the suspension is again cooled down to -78 °C. Now 1.10 gm of ZrCl₄ is added. That suspension is agitated, at room temperature, for another 14 hours, in which case a fine red powder forms that can be crystallised after a separation of formed LiCl from toluol.

Yield: 2.148 gms (4.11 mmols, 87.1 % of the theory). NMR (500 mcps, C₂D₂Cl₄ 80 °C) ; δ 2.00 ppm m 2 H methylene group cyclopentane ring (J = 6.8 to 7.5 cps), δ 2.15 ppm s 3 H methyl group, δ 2.79 to 2.94 ppm m 4 H methylene groups cyclopentane ring adjacent to the aromatic system (J = 7.5 to 9.7 cps), δ 4.05 ppm m (J = 3.5 to 13.2 cps) 2 H aliphatic protons of the bridge (in case of the fluorene), δ 3.83 and 4.57 ppm m (J = 4.2 to 10.0 cps) 1 H aliphatic protons of the bridge (diastereotopic) at a time, δ 6.05 ppm s 1 H indene proton, δ 7.03 to 7.85 ppm m 10 H aromatic.

MS (El) m/z 5, 22, 6 isotopic pattern corresponding

| | |
|---|---|
| EA CH-combustion analysis | calculated 64.35 % C 4, 63 % H |
| Found | 64.08/63.89% 4.53/4.63% |

### Polymerisation example

All the polymerisations were carried out in 300 mL of toluol under the conditions indicated in Table 1.

The NMR data were measured by means of a Bruker AMX 500 device and evaluated on the basis of literature data.

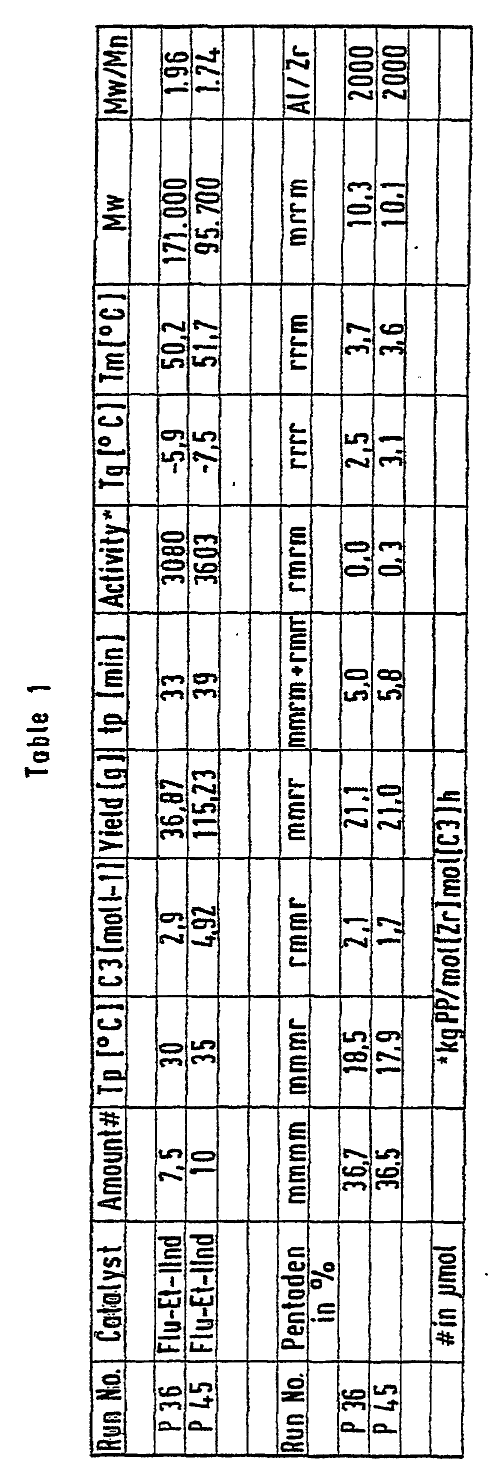

## Claims

1. A catalyst combination for preparing linear isotactic polymers, said catalyst combination containing a metal complex of general Formula I 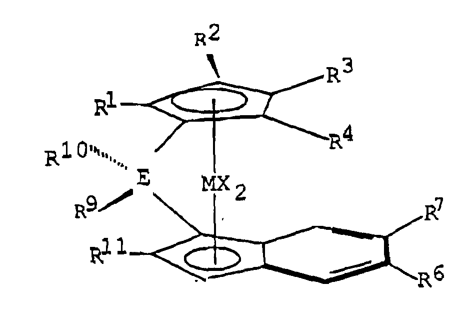 wherein the substituents have the following significations:
R¹ - R⁷ linear or branched C₁ to C₁₀ alkyl, 5- to 7-linked cycloalkyl which, in its turn, can carry one or several C₁ to C₆ alkyl residues as substituent, C₆ to C₁₈ aryl or arylalkyl or alkylaryl, in which case R¹/R², R³/R⁴, R⁶/R⁷ can be partially or simultaneously integrated into 5- to 7-linked cycloalkyl or aryl rings fused thereto;
E 1.2-ethyl, 1.3-propyl, 1.4-butyl or
E carbon, silicon, germanium with
R⁹, R¹⁰ C₁ to C₈ alkyl, 4- to 7-linked cycloalkyl, aryl, in which case R⁹, R¹⁰ can, jointly with E, form a 4- to 7-linked cycloalkyl or aryl;
R¹¹ C₁ to C₈ alkyl, aryl, C₁ to C₈ oxyalkyl, C₁ to C₈ trialkylsiloxy;
M titanium, zirconium, hafnium, vanadium, niobium, tantalum;
X halogen or C₁ to C₈ alkyl, aryl, benzyl;
and an activator.

2. A catalyst combination as well as an activator according to Claim 1, **characterised in that** the activator is an open-chain or cyclic alumoxane compound of general Formula II or III 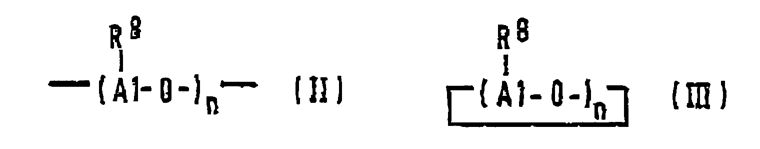 R⁸ standing for a C₁ to C₄ alkyl group and n standing for a number between 5 and 30, and/or a cationic activator of general Formulas IV to VI
B(C₆F₅)₃ (IV)
R⁹ ₃C[B(C₆F₅)₄] (V)
[R⁹ ₃N H][B (C₆F₅)₄] (VI),
R⁹ signifying a C₁ to C₄ alkyl group or an aryl group.

3. A catalyst combination according to Claim 1 or 2, **characterised in that** the matal complex according to general Formula I is a compound of general Formula VII 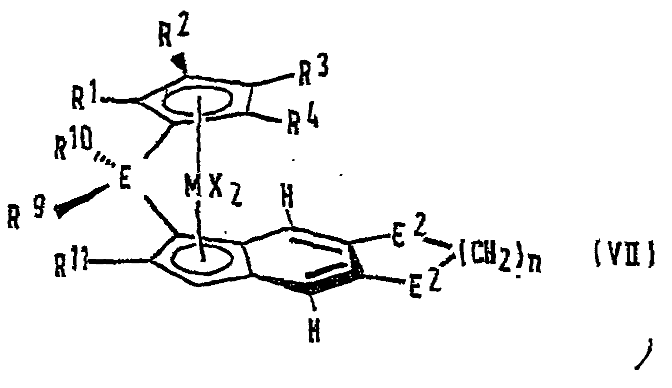 wherein the residues R¹ to R¹¹ have the significations indicated in general Formula I and E² = CH₂, O or S and n = 1 or 2.

4. A catalyst combination according to at least one of Claims 1 to 3, **characterised in that** the metallocene complex of general. Formula I and the activator according to general Formulas II to VI are utilised in such quantities that the atomic ratio between aluminium from the alumoxane and/or boron from the cationic activator and the transition metal from the metallocene complex is within the range of from 1:1 to 10⁶:1.

5. A process for preparing linear, isotactic polymers which have a structure of which the tacticity varies within the range of between 25 and 60 % of [mmmm] pentad concentration, an arbitrary or rather regular sequence of isotactic and atactic blocks being excluded, in which process a C₂ to C₂₀ olefin are reacted with a catalyst combination being defined in claim 1 to 4.

6. A process according to Claim 5, **characterised in that** the polymerisation reaction is carried out in the gas phase, in suspension or in supercritical monomers, especially in solvents inert under the polymerisation conditions.

7. A process according to claim 5 or 6, **characterised in that**, as inert solvents, solvents are used that do not contain any reactive molecules, such as e.g. benzole, toluol, xylol, ethyl benzole or alkanes such as e.g. propane, n-butane, i-butane, pentane, hexane, heptane or mixtures thereof.

8. A process according to at least one of Claims 5 to 7, **characterised in that** polymerisation is carried out at pressures of from 1 to 100 bars, preferably from 3 to 20 bars and especially from 5 to 15 bars, and at temperatures of from - 50 to 200 °C, of preference from 10 to 150 °C and especially at from 20 to 40 °C.

## Patentansprüche

1. Katalysatorkombination zur Herstellung von linearen isotaktischen Polymeren, wobei die Katalysatorkombination einen Metallkomplex der allgemeinen Formel I enthält 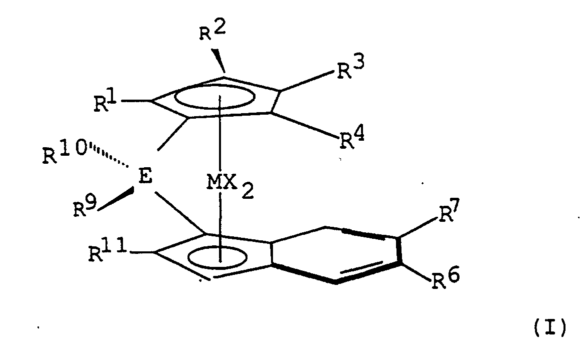 worin die Substituenten die folgende Bedeutung haben:
R¹ - R⁷ lineares oder verzweigtes C₁ bis C₁₀ Alkyl, 5- bis 7-gliedriges Cykloalkyl, das seinerseits einen oder mehrere C₁ bis C₆ Alkylreste als Substituenten tragen kann, C₆ bis C₁₈ Aryl oder Arylalkyl oder Alkylaryl, wobei R¹/R², R³/R⁴, R⁶/R⁷ teilweise oder gleichzeitig in 5- bis 7-gliedrige ankondesierte Cyklyoalkyl- oder Arylringe eingebunden sein können;
E 1.2-Ethyl, 1.3-Propyl, 1.4-Buthyl oder
E Kohlenstoff, Silikon, Germanium mit
R⁹, R¹⁰ C₁ bis C₈ Alkyl, 4- bis 7-gliedriges Cykloalkyl, Aryl, wobei R⁹ und R¹⁰ gemeinsam mit E ein 4- bis 7-gliedriges Cykloalkyl oder Aryl bilden kann;
R¹¹ C₁ bis C₈ Alkyl, Aryl, C₁ bis C₈ Oxyalkyl, C₁ bis C₈ Trialkylsiloxy,
M Titan, Zirkon, Hafnium, Vanadium, Niob, Tantal,
X Halogen oder C₁ bis C₈ Alkyl, Aryl, Benzyl und
einen Aktivator.

2. Katalysatorkombination mit einem Aktivator nach Anspruch 1, **dadurch gekennzeichnet, daß** der Aktivator eine offenkettige oder zyklische Alumoxan-Verbindung der allgemeinen Formeln II oder III 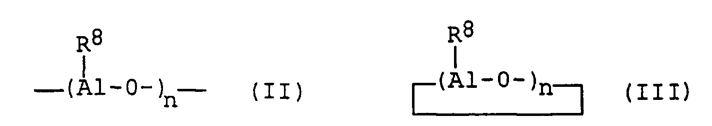 wobei R⁸ eine C₁ bis C₄ Alkylgruppe und n für eine Zahl zwischen 5 und 30 steht, und/oder ein kationischer Aktivator der allgemeinen Formeln IV bis VI
B(C₆F₅)₃ (IV)
R⁹ ₃C[B(C₆F₅)₄] (V)
[R⁹ ₃N H] [B (C₆F₅)₄] (VI)
wobei R⁹ eine C₁ bis C₄ Alkylgruppe oder eine Arylgruppe, bedeutet, ist.

3. Katalysatorkombination nach Anspruch 1 oder 2, **dadurch gekennzeichnet, daß** der Metallkomplex nach der allgemeinen Formel I eine Verbindung der allgemeinen Formel VII ist 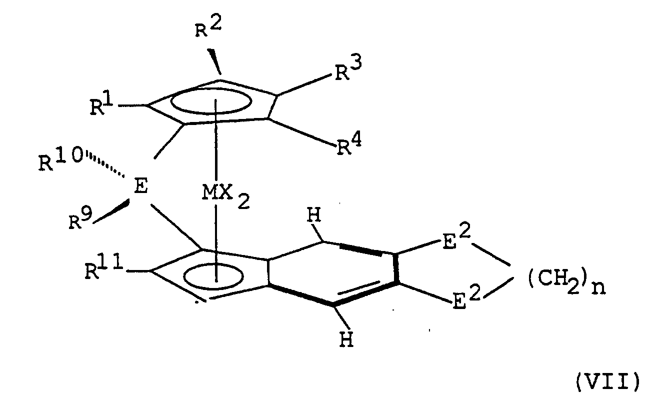 worin die Reste R¹ bis R¹¹, die in der allgemeinen Formel I angegebene Bedeutung besitzen und E² = CH₂, O oder S und n = 1 oder 2 ist.

4. Katalysatorkombination nach mindestens einem der Ansprüche 1 bis 3, **dadurch gekennzeichnet, daß** der Metallocenkomplex der allgemeinen Formel I und der Aktivator nach den allgemeinen Formeln II bis VI in solchen Mengen verwendet werden, daß das atomare Verhältnis zwischen Aluminium aus dem Alumoxan und/oder Bor aus dem kationischen Aktivator und dem Übergangsmetall aus dem Metallocenkomplex im Bereich von 1:1 bis 10⁶:1 liegt.

5. Verfahren zur Herstellung von linearen isotaktischen Polymeren mit einer Struktur bei der die Taktizität im Bereich zwischen 25 und 60 % [mmmm] Pentadenkonzentration variiert, wobei eine willkürliche oder auch regelmäßige Abfolge von isotaktischen und ataktischen Blöcken ausgeschlossen ist, wobei bei dem Verfahren ein C₂ bis C₂₀ Olefin mit einer Katalysatorkombination nach den Ansprüchen 1 bis 4 umgesetzt wird.

6. Verfahren nach Anspruch 5, **dadurch gekennzeichnet, daß** die Polymerisationsreaktion in der Gasphase, in Suspension oder in überkritischen Monomeren, insbesondere in unter den Polymerisationsbedingungen inerten Lösungsmitteln durchgeführt wird.

7. Verfahren nach Anspruch 5 oder 6, **dadurch gekennzeichnet, daß** als inerte Lösungsmittel Lösungsmittel eingesetzt werden, die keine reaktiven Moleküle enthalten, wie z.B. Benzol, Toluol, Xylol, Ethylbenzol oder Alkane wie z.B. Propan, N-Butan, Isoi-Butan, Pentan, Hexan, Heptan oder Gemische hiervon.

8. Verfahren nach mindestens einem der Ansprüche 5 bis 7, **dadurch gekennzeichnet, daß** die Polymerisation bei Drücken von 1 bis 100 bar, vorzugsweise von 3 bis 20 bar und insbesondere von 5 bis 15 bar, Temperaturen von -50 bis 200 °C, bevorzugt 10 bis 150 °C und insbesondere bei 20 bis 40 °C durchgeführt wird.

## Revendications

1. Association catalytique pour la préparation de polymères isotactiques linéaires, ladite association catalytique contenant un complexe métallique de formule générale I 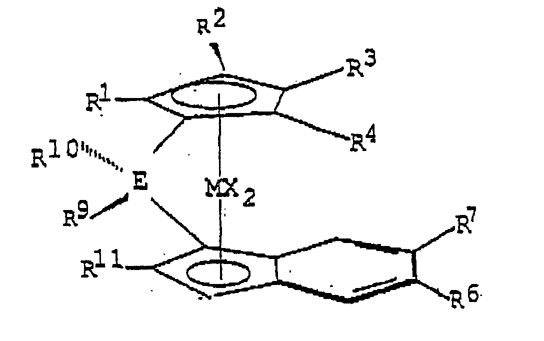 dans laquelle les substituants ont les significations suivantes :
R¹ - R⁷ alkyle en C₁-C₁₀ linéaire ou ramifié, cycloalkyle ayant 5 à 7 chaînons qui peut lui-même porter un ou plusieurs résidus alkyle en C₁-C₆ comme substituants, aryle ou arylalkyle ou alkylaryle en C₆-C₁₈, auquel cas R¹/R², R³/R⁴, R⁶/R⁷ peuvent être partiellement ou simultanément intégrés dans des cycles cycloalkyle ou aryle ayant 5 à 7 chaînons qui y sont condensés;
Egroupe 1,2-éthyle, 1,3-propyle, 1,4-butyle ou bien
Ecarbone, silicium, germanium avec
R⁹, R¹⁰ alkyle en C₁-C₈, aryle, cycloalkyle ayant 4 à 7 chaînons, auquel cas R⁹, R¹⁰ peuvent former, avec E, un groupe cycloalkyle ou aryle ayant 4 à 7 chaînons;
R¹¹ alkyle en C₁-C₈, aryle, oxyalkyle en C₁-C₈, tri(alkyle en C₁-C₈)siloxy ;
Mtitane, zirconium, hafnium, vanadium, niobium, tantale ;
Xhalogène ou alkyle en C₁-C₈, aryle, benzyle ;
et un activateur.

2. Association catalytique ainsi qu'un activateur selon la revendication 1, **caractérisée en ce que** l'activateur est un alulnoxane à chaîne ouverte ou cyclique de formule générale II ou III 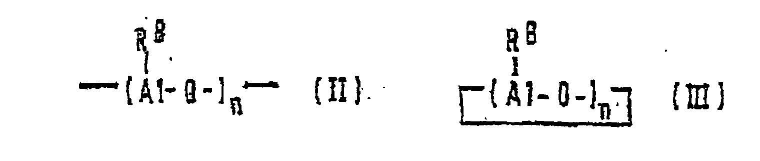 R⁸ représentant un groupe alkyle en C₁-C₄ et n représentant un nombre compris entre 5 et 30, et/ou un activateur cationique de formule générale IV à VI
B(C₆F₅)₃ (IV)
R⁹ ₃C[B(C₆F₅)₄] (V)
[R⁹ ₃N H] [B (C₆F₅)₄] (VI)
R⁹ représentant un groupe alkyle en C₁-C₄ ou un groupe aryle.

3. Association catalytique selon la revendication 1 ou 2, **caractérisée en ce que** le complexe métallique selon la formule générale I est un composé de formule générale VII 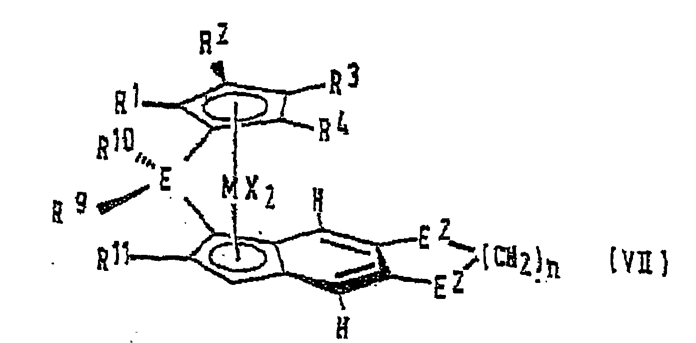 dans laquelle les résidus R¹ à R¹¹ ont les significations données dans la formule générale I et E² = CH₂, O ou S et n = 1 ou 2.

4. Association catalytique selon l'une au moins des revendications 1 à 3, **caractérisée en ce que** le complexe métallocène de formule générale I et l'activateur selon les formules générales II à VI sont utilisés en des quantités telles que le rapport atomique entre l'aluminium de l'alumoxane et/ou le bore de l'activateur cationique et le métal de transition du complexe métallocène soit compris dans l'intervalle de 1:1 à 10⁶:1.

5. Procédé pour la préparation de polymères isotactiques linéaires, qui ont une structure dont la tacticité varie dans l'intervalle compris entre 25 et 60 % de concentration de pentades [mmmm], une séquence arbitraire ou assez régulière de blocs isotactiques et atactiques étant exclue, procédé dans lequel on fait réagir une oléfine en C₂ à C₂₀ avec une association catalytique définie dans les revendications 1 à 4.

6. Procédé selon la revendication 5, **caractérisé en ce que** la réaction de polymérisation est conduite en phase gazeuse, en suspension ou dans des monomères en conditions surcritiques, notamment dans des solvants inertes dans les conditions de polymérisation.

7. Procédé selon la revendication 5 ou 6, **caractérisé en ce que**, comme solvants inertes, on utilise des solvants qui ne contiennent pas de molécules réactives, tels que, par exemple, le benzol, le toluol, le xylol, l'éthyl-benzol, ou des alcanes tels que, par exemple, le propane, le *n*-butane, l'isobutane, le pentane, l'hexane, l'heptane ou des mélanges d'entre eux.

8. Procédé selon l'une au moins des revendications 5 à 7, **caractérisé en ce que** la polymérisation est conduite à des pressions de 1 à 100 bars, de préférence de 3 à 20 bars et notamment de 5 à 15 bars, et à des températures de -50 à 200°C, de préférence de 10 à 150°C et notamment de 20 à 40°C.
